(19) Europäisches Patentamt / European Patent Office / Office européen des brevets

(11) **EP 3 477 931 B1**

(12) **EUROPEAN PATENT SPECIFICATION**

(45) Date of publication and mention of the grant of the patent:
**03.08.2022 Bulletin 2022/31**

(21) Application number: **18202025.5**

(22) Date of filing: **23.10.2018**

(51) International Patent Classification (IPC):
**H04N 1/32** *(2006.01)*     **H04N 1/40** *(2006.01)*
**G06T 5/00** *(2006.01)*     **G06K 9/00** *(2022.01)*

(52) Cooperative Patent Classification (CPC):
**H04N 1/32; G06T 5/002; G06V 40/161; H04N 1/40; H04N 1/40093**

(54) **IMAGE PROCESSING METHOD AND DEVICE, READABLE STORAGE MEDIUM AND ELECTRONIC DEVICE**

BILDVERARBEITUNGSVERFAHREN UND -VORRICHTUNG, LESBARES SPEICHERMEDIUM UND ELEKTRONISCHE VORRICHTUNG

PROCÉDÉ ET DISPOSITIF DE TRAITEMENT D'IMAGES, SUPPORT D'INFORMATIONS LISIBLE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2017 CN 201711054181**

(43) Date of publication of application:
**01.05.2019 Bulletin 2019/18**

(73) Proprietor: **GUANGDONG OPPO MOBILE TELECOMMUNICATIONS CORP., LTD.**
**Wusha, Chang'an**
**Dongguan,**
**Guangdong 523860 (CN)**

(72) Inventor: **ZENG, Yuanqing**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(56) References cited:
**CN-A- 104 537 612      CN-A- 105 096 241**
**CN-A- 107 302 662      US-A1- 2007 258 656**
**US-A1- 2011 091 113**

• LINGYU LIANG ET AL: "Facial Skin Beautification Using Adaptive Region-Aware Masks", IEEE TRANSACTIONS ON CYBERNETICS, vol. 44, no. 12, 1 December 2014 (2014-12-01), pages 2600-2612, XP055558761, Piscataway, NJ, USA ISSN: 2168-2267, DOI: 10.1109/TCYB.2014.2311033

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## TECHNICAL FIELD

The disclosure relates to the field of image processing, and particularly to an image processing method and device, and a computer-readable storage medium.

## BACKGROUND

Photographing is an essential skill in both of work and life. For taking a satisfactory photo, it is not only necessary to improve shooting parameters in a shooting process but also necessary to retouch the photo after shooting. Beauty processing refers to a method for retouching a photo. After beauty processing, a figure in the photo may look more consistent with a human aesthetic standard. CN107302662A relates to a method for taking pictures, the method including: obtaining a previewed face image; acquiring feature information of the face image; determining a first skin color value of the face image; acquiring a beauty parameter corresponding to the first skin color value, and taking a beauty photo according to the beauty parameter.

## SUMMARY

The present invention is as defined in the amended set of claims.

According to a first aspect, the embodiments of the disclosure provide an image processing method according to claim 1.

According to a second aspect, the embodiments of the disclosure provide an image processing device according to claim 8.

According to a third aspect, the embodiments of the disclosure provide a computer-readable storage medium according to claim 9.

## BRIEF DESCRIPTION OF DRAWINGS

In order to describe the technical solutions in the embodiments of the disclosure or a conventional art more clearly, the drawings required to be used in the embodiments or the conventional art will be simply introduced below. It is apparent that the drawings described below are only some embodiments of the disclosure, and those of ordinary skilled in the art may also obtain other drawings according to these drawings without creative work.

FIG. 1 is a diagram of an application environment of an image processing method according to an embodiment of the disclosure.
FIG. 2 is a flowchart of an image processing method according to an embodiment of the disclosure.
FIG. 3 is a flowchart of an image processing method according to another embodiment of the disclosure.
FIG. 4 is a flowchart of an image processing method according to another embodiment of the disclosure.
FIG. 5 is a schematic diagram of acquiring depth information according to an embodiment of the disclosure.
FIG. 6 is a color histogram generated according to an embodiment of the disclosure.
FIG. 7 is a schematic diagram of phase detection automatic focusing according to an embodiment of the disclosure.
FIG. 8 is a schematic diagram of a contrast detection automatic focusing process according to an embodiment of the disclosure.
FIG. 9 is a schematic structure diagram of an image processing system according to an embodiment of the disclosure.
FIG. 10 is a schematic structure diagram of an image processing system according to another embodiment of the disclosure.
FIG. 11 is a schematic structure diagram of an image processing device according to an embodiment of the disclosure.
FIG. 12 is a schematic structure diagram of an image processing device according to another embodiment of the disclosure.
FIG. 13 is a schematic diagram of an image processing circuit according to an embodiment of the disclosure.

## DETAILED DESCRIPTION

In order to make the purposes, technical solutions and advantages of the disclosure clearer, the disclosure will be further described below in combination with the drawings and the embodiments in detail. It should be understood that the specific embodiments described herein are only adopted to explain the disclosure and not intended to limit the disclosure.

It can be understood that terms "first", "second" and the like used in the disclosure may be adopted to describe various components and not intended to limit these components. These terms are only adopted to distinguish a first component from another component. For example, without departing from the scope of the disclosure, a first acquisition module may be called a second acquisition module, and similarly, the second acquisition module may be called the first acquisition module. Both of the first acquisition module and the second acquisition module are acquisition modules but not the same acquisition module.

Any embodiment in the description that does not fall within the scope of the claims shall be regarded as an example for understanding the present invention. According to the image processing method and device, the computer-readable storage medium and the electronic device provided in the embodiments of the disclosure, the facial feature parameter of the image to be processed may be acquired by the first processing unit of the terminal, the target beauty parameter is obtained by the second processing unit according to the facial feature parameter and the environmental parameter, and beauty processing is performed on the image to be processed by the third processing unit according to the target beauty parameter. Beauty processing may be performed according to different features of the image to be processed, and processing accuracy of the image to be processed is improved.

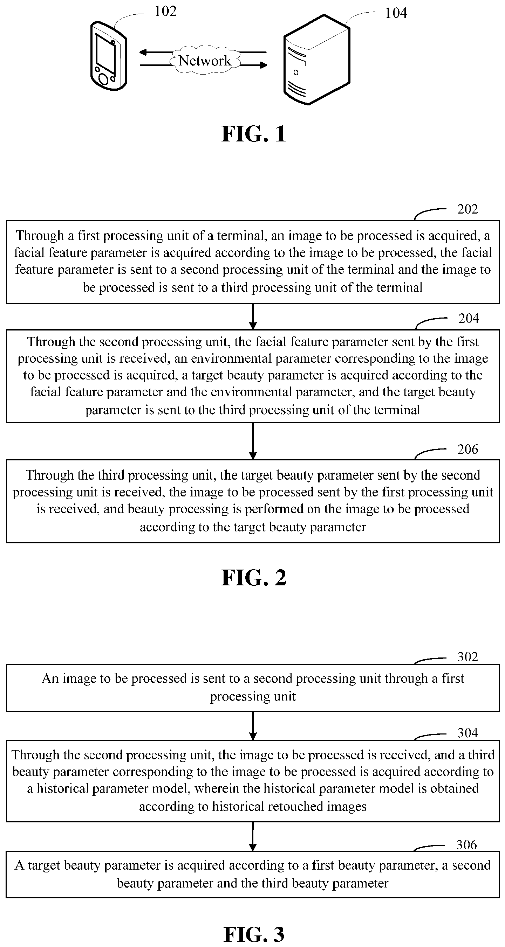

FIG. 1 is a diagram of an application environment of an image processing method according to an embodiment. As illustrated in FIG. 1, the application environment includes a terminal 102 and a server 104. The terminal 102 may, through a first processing unit, acquire an image to be processed, acquire a facial feature parameter according to the image to be processed, send the facial feature parameter to a second processing unit and send the image to be processed to a third processing unit. The terminal 102 may, through the second processing unit, receive the facial feature parameter sent by the first processing unit, acquire an environmental parameter corresponding to the image to be processed, acquire a target beauty parameter according to the facial feature parameter and the environmental parameter and send the target beauty parameter to the third processing unit, wherein the target beauty parameter may be configured for performing beauty processing on the image to be processed. The terminal 102 may, through the third processing unit, receive the target beauty parameter sent by the second processing unit, receive the image to be processed sent by the first processing unit and perform beauty processing on the image to be processed according to the target beauty parameter. The server 104 may send a feature recognition model to the terminal 102. After receiving the feature recognition model, the terminal 102 acquires the facial feature parameter according to the feature recognition model. In the example, the terminal 102 is an electronic device positioned on the most periphery of a computer network and mainly configured to input user information and output a processing result. For example, the terminal 102 may be a Personal Computer (PC), a mobile terminal, a personal digital assistant, wearable electronic equipment and the like. The server 104 is a device configured to respond to a service request and simultaneously provide computing service. For example, the server 104 may be one or more computers. It can be understood that, in other embodiments provided by the disclosure, the application environment of the image processing method may include the terminal 102 only.

FIG. 2 is a flowchart of an image processing method according to an embodiment of the disclosure. As illustrated in FIG. 2, the image processing method includes operations at blocks 202 to 206.

At block 202, through a first processing unit of a terminal, an image to be processed is acquired, a facial feature parameter is acquired according to the image to be processed, the facial feature parameter is sent to a second processing unit of the terminal and the image to be processed is sent to a third processing unit of the terminal.

In an embodiment, the terminal may be a mobile terminal device such as a mobile phone, wearable equipment, a tablet computer and a personal digital assistant, and may also be a PC and the like. The terminal includes an image processing system, and the image processing system includes three layers of structures, i.e., the first processing unit, the second processing unit and the third processing unit, and each service unit in the three layers of structures cooperates to implement an image processing. The first processing unit may be configured to extract a feature in the image to be processed. The second processing unit may be configured to acquire the target beauty parameter for performing beauty processing on the image according to the extracted feature. The third processing unit may be configured to perform beauty processing on the image to be processed according to the acquired target beauty parameter.

The image to be processed refers to an image required to be retouched. The image to be processed may be acquired by the terminal. A camera configured for shooting is mounted on the terminal. A user may initiate photographing instructions through the terminal, and after detecting the photographing instructions, the terminal acquires images through the camera. The terminal may store the acquired images to form an image set. It can be understood that the image to be processed may also be acquired by other means, and there are no limits made herein. For example, the image to be processed may further be downloaded from a webpage or imported from an external storage device.

The operation that the image to be processed is acquired may specifically include that: a beauty instruction input by the user is received, and the image to be processed is acquired by the first processing unit of the terminal according to the beauty instruction, wherein the beauty instruction includes an image identifier. The image identifier refers to a unique identifier for distinguishing different images to be processed, and the image to be processed is acquired according to the image identifier. For example, the image identifier may be one or more of an image name, an image code, an image storage address and the like. Specifically, the terminal may be a mobile terminal, after the mobile terminal acquires the image to be processed, beauty processing may be performed locally in the mobile terminal, and the image to be processed may also be sent to a server for beauty processing. In another embodiment provided by the disclosure, beauty processing may be performed on the acquired image during a shooting process, that is, an original image in a present shooting scenario is acquired through an imaging device to generate the image to be processed. Then, the image to be processed is acquired processed through the first processing unit, and the terminal may directly display the image retouched through the beauty processing.

The facial feature parameter refers to a parameter for representing a figure attribute corresponding to a face in the image to be processed. For example, the facial feature parameter may include a parameter such as a race, sex, age and skin type corresponding to the face. Specifically, a face region in the image to be processed may be detected at first, and then the corresponding facial feature parameter is acquired according to the face region. For example, the face region in the image to be processed is detected through a Facial Detection (FD) algorithm, features on the face, such as eyes, nose, lip and the like are detected through a Facial Feature Detection (FFD) algorithm. Then, size parameters, such as sizes and proportions of the five sense organs of the face may be obtained according to the extracted features, and the features of the face, such as the race, sex, age and the like may be identified according to the acquired size parameters. Specifically, the FD algorithm may include a geometric-feature-based detection method, an eigen FD method, a linear discriminant analysis method, a hidden Markov model-based detection method and the like, and will not be limited herein. It is easy to understand that the image to be processed is formed by a plurality of pixels and the face region is a region formed by the pixels corresponding to the face in the image to be processed. In general, the image to be processed may include one or more face regions, each face region is an independent connected region, and these independent face regions are extracted for performing respective beauty processing. The image to be processed may also include no face region. When there is no face region, the image to be processed is not processed.

The first processing unit of the terminal sends the facial feature parameter to the second processing unit of the terminal and sends the image to be processed to the third processing unit of the terminal. It can be understood that, in the embodiment provided by the disclosure, the first processing unit, second processing unit and third processing unit of the terminal are virtual framework layers defined in a function system, wherein each layer is implemented through a code set and simultaneously encapsulated through a code function. In an image processing process, an interface of the code function may be directly called to input or output processed data, thereby implementing data transmission between layers.

At block 204, through the second processing unit, the facial feature parameter sent by the first processing unit is received, an environmental parameter corresponding to the image to be processed is acquired, a target beauty parameter is acquired according to the facial feature parameter and the environmental parameter, and the target beauty parameter is sent to the third processing unit of the terminal.

In an embodiment, the environmental parameter refers to a parameter related to an environment where the image to be processed is generated. The environmental parameter may be, but not limited to, a parameter such as environmental brightness and an environmental color temperature. The environmental brightness refers to light intensity of the shooting environment, and the environmental color temperature refers to a color temperature of the shooting environment. In the shooting process of the mobile terminal, the environmental brightness of the present shooting environment may be detected by an environmental light sensor, and the environmental light sensor may output different voltage values according to different external light intensities and convert optical information under different intensities into digital information. For example, when output of the light sensor is 8bit, $2^8$ light intensities, i.e., 256 light intensities, may theoretically be distinguished, and the external light intensity is determined according to this principle. A color temperature sensor may be mounted on the mobile terminal, and the environmental color temperature may be detected by the color temperature sensor in the shooting process. The color temperature sensor includes three illuminance sensors, and the three illuminance sensors are configured with Red (R), Green (G) and Blue (B) light sheets, respectively. When light is received, currents corresponding to R, G and B light are output by the three illuminance sensors respectively, and the environmental color temperature is calculated according to the output currents. In the image shooting process, an original image in a RAW format is generated through a Charge-Coupled Device (CCD) or a Complementary Metal Oxide Semiconductor (CMOS), and then it is necessary to perform a series of processing such as denoising, correction, white balance and color space conversion on the original image by an Image Signal Processing (ISP) unit to acquire a final output image. Therefore, the ISP unit may acquire the environmental brightness and the environmental color temperature, and directly send the acquired environmental brightness and environmental color temperature to the second processing unit.

The target beauty parameter refers to a parameter for beauty processing on the image to be processed, and the target beauty parameter is acquired according to the facial feature parameter and the environmental parameter. Specifically, the target beauty parameter may include a first beauty parameter and a second beauty parameter. The first beauty parameter is acquired according to the facial feature parameter, the second beauty parameter is acquired according to the environmental parameter, and then the target beauty parameter is acquired according to the first beauty parameter and the second beauty parameter. There is a corresponding between the facial feature and the first beauty parameter, and the corresponding first beauty parameter may be acquired according to the facial feature parameter. For example, when the face in the image is recognized to be a female, whitening and makeup processing may be performed on the face, such as, applying blush, performing lip retouching or the like. When the face in the image is recognized to be a male, filtering processing may be performed on the face. There is also a corresponding between the environmental parameter and the second beauty parameter, and the second beauty parameter may be acquired according to the environmental parameter. For example, when the environmental brightness of the image is slightly low, brightening processing may be performed on the face in the image.

In another embodiment provided by the disclosure, the target beauty parameter may also be generated according to beauty images retouched by the user. As illustrated in FIG. 3, the image processing method further includes the following operations. At block 302, the image to be processed is sent to the second processing unit through the first processing unit. At block 304, through the second processing unit, the image to be processed is received, and a third beauty parameter corresponding to the image to be processed is acquired according to a historical parameter model, wherein the historical parameter model is obtained according to historical beauty images. At block 306, the target beauty parameter is acquired according to the first beauty parameter, the second beauty parameter and the third beauty parameter. Specifically, the historical parameter model is obtained according to historical beauty images, and then the third beauty parameter is acquired according to the historical parameter model. The historical beauty images refer to historical images retouched through beauty processing. For example, an album for storing historical images processed by the user may be created in the terminal. When training the historical parameter model, the terminal may directly read the album to acquire the historical beauty images and train the historical beauty images to obtain the historical parameter model. The image to be processed may be input into the historical parameter model to output the corresponding third beauty parameter. The historical beauty images may reflect a beauty processing habit of the user, for example, a beauty processing frequency of the user and a beauty processing type frequently used by the user. The historical beauty images are trained to obtain the historical parameter model, and the third beauty parameter acquired according to the historical parameter model may be set for a preference of the user. For example, the user may perform level-3 whitening processing on a face in an indoor environment, and when the image to be processed is recognized to be in the same indoor environment, level-3 whitening processing is also performed on the face. In another example, when an occurrence frequency of the face of the user in the historical beauty images is relatively high and eye widening processing is used most frequently for the face of the user, after the face of the user is recognized in the image to be processed, eye widening processing is performed on the face of the user.

At block 206, through the third processing unit, the target beauty parameter sent by the second processing unit is received, the image to be processed sent by the first processing unit is received, and beauty processing is performed on the image to be processed according to the target beauty parameter.

In an embodiment, the second processing unit may send the target beauty parameter to the third processing unit after acquiring the target beauty parameter, and the third processing unit performs beauty processing on the image to be processed according to the target beauty parameter. Beauty processing refers to a process of beautifying a figure in the image. Generally, beauty processing may include processing of filtering, whitening, eye widening, face-lift, skin color regulation, acne removal, eye brightening and the like, which will not be limited herein.

According to the image processing method provided by the embodiment, the facial feature parameter of the image to be processed may be acquired through the first processing unit of the terminal, the target beauty parameter is obtained through the second processing unit according to the facial feature parameter and the environmental parameter, and beauty processing is performed on the image to be processed through the third processing unit according to the target beauty parameter. Beauty processing may be performed according to different features of the image to be processed, and processing accuracy of the image to be processed is improved.

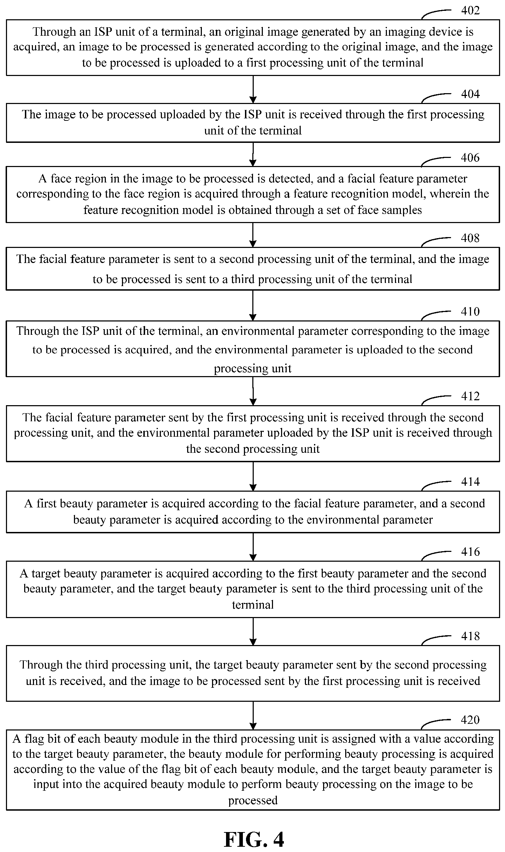

FIG. 4 is a flowchart of an image processing method according to another embodiment of the disclosure. As illustrated in FIG. 4, the image processing method includes operations at blocks 402 to 420.

At block 402, through an ISP unit of a terminal, an original image generated by an imaging device is acquired, an image to be processed is generated according to the original image, and the image to be processed is uploaded to a first processing unit of the terminal.

In an embodiment, the terminal includes the ISP unit and the imaging device, wherein the ISP unit may be an Imaging Signal Processing (ISP) processor. The imaging device includes one or more lenses and an image sensor. A light path of light may be changed by the lenses, and light intensity and wavelength information are captured by a color filter array of the image sensor to generate the original image. Then, the imaging device sends the original image to the ISP unit for processing to obtain the image to be processed. It can be understood that the original image output by the image sensor is in a RAW format, and the original image is an image without any processing. The original image in the RAW format is formed by a plurality of pixels, and each pixel senses only one color of R, G and B. The pixels are arranged according to a certain rule. Every four pixels of the original image in the RAW format form a pixel unit, and the most common arrangement manner is an RG/GB arrangement manner, that is, each pixel unit is formed by 50% of G, 25% of R and 25% of B. In the example, the RAW format includes a Bayer format, and a pixel unit in an image in the Bayer format is arranged in an RGRG/GBGB manner.

In general, the ISP unit may process the original image and represent each pixel with three channel values RGB by interpolation processing to obtain the final image to be processed. The obtained image to be processed is also formed by a plurality of pixels, and these pixels are arranged according to a certain rule. The image to be processed is a two-dimensional pixel array. Each pixel in the pixel array has corresponding three channel values RGB, and a position of each pixel in the image may be represented with a position coordinate. For example, the image to be processed may be 640∗480, which indicates that the image to be processed includes 640 pixels in length and 480 pixels in width and the total number of the pixels is 640∗480=307,200, that is, a resolution of the image to be processed is 30 thousand pixels.

At block 404, the image to be processed uploaded by the ISP unit is received through the first processing unit of the terminal.

At block 406, a face region in the image to be processed is detected, and a facial feature parameter corresponding to the face region is acquired through a feature recognition model, wherein the feature recognition model is obtained by a set of face samples.

Specifically, the feature recognition model is configured to identify one or more facial feature parameters corresponding to the face region, and the feature recognition model is obtained by the set of face samples. The set of face samples refers to an image set formed by a plurality of facial images, and the feature recognition model is obtained according to the set of face samples. In general, if there are more facial images in the set of face samples, the obtained feature recognition model is more accurate. For example, during supervised learning, each facial image in the set of face samples is marked with a corresponding label to mark a type of the facial image, and the feature recognition model may be obtained by training the set of face samples. The feature recognition model may classify the face region to obtain the corresponding facial feature parameter. For example, the face region may be divided into a yellow race, a black race and a white race, and then the obtained corresponding facial feature parameter is one of the yellow race, the black race or the white race. Therefore, classification through the feature recognition model is based on the same standard. It can be understood that, for obtaining facial feature parameters of different dimensions of the face region, different feature recognition models may be adopted for acquisition. Specifically, the facial feature parameter may include one or more of a race feature parameter, a sex feature parameter, an age feature parameter, a skin color feature parameter, a skin type feature parameter, a facial feature parameter and a makeup feature parameter, which will not be limited herein. For example, the race feature parameter corresponding to the face region is obtained according to a race recognition model, the age feature parameter corresponding to the face region is obtained according to an age recognition model, the sex feature parameter corresponding to the face region is obtained according to a sex recognition model, and the makeup feature parameter corresponding to the face region is obtained according to a makeup recognition model, including at least a blush parameter and a lip retouching parameter.

In the invention, after the face region in the image to be processed is detected, a physical attribute parameter corresponding to the face region is acquired, and the face region required to be retouched is acquired according to the physical attribute parameter. The physical attribute parameter of the face region refers to a region area of the face region and also refers to depth information corresponding to the face region. In the example, the region area refers to the area of the face region, and the depth information refers to a physical distance between a face and a camera. In general, when the distance between the face and the camera is larger, an area corresponding to the face in the image is smaller. Once the area of the face is too small, beauty processing on the face may distort the face. The operation at block 406 may include that: first face regions in the image to be processed and physical attribute parameters corresponding to the first face regions are detected, and the second face region of which the physical attribute parameter is larger than a threshold value is acquired; and the facial feature parameter corresponding to the second face region is acquired through the feature recognition model, wherein the feature recognition model is obtained through the set of historical face samples. For example, a face of which depth information is larger than 3 meters is not retouched, and only a face of which depth information is smaller than 3 meters is retouched.

It can be understood that the image to be processed is formed by a plurality of pixels, the face region is formed by a plurality of pixels in the image to be processed. Therefore, the area of the face region may be represented as the total number of the pixels included in the face region, and may also be represented as a proportion of the area of the face region to the area of the image to be processed. When the image is acquired through the camera, a depth map corresponding to the image may be simultaneously acquired, and pixels in the depth map correspond to the pixels in the image. Each pixel in the depth map represents depth information of the corresponding pixel in the image, and the depth information is depth information from an object corresponding to the pixel to an image acquisition device. For example, the depth information may be acquired by double cameras, and the obtained depth information corresponding to the pixels may be 1 meter, 2 meters, 3 meters or the like. Therefore, after the face region is acquired, the depth information corresponding to the face region may be acquired from the depth map.

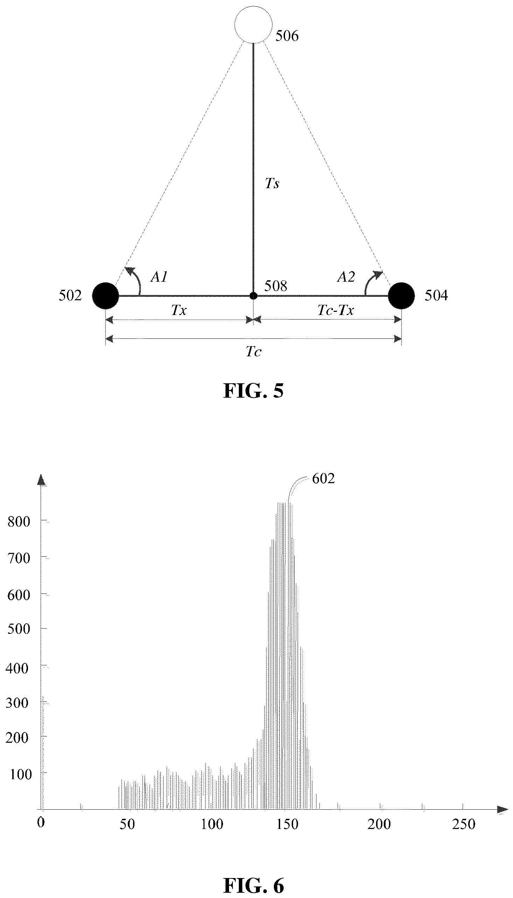

FIG. 5 is a schematic diagram of acquiring depth information according to an embodiment of the disclosure. As illustrated in FIG. 5, a distance $T_c$ between a first camera 502 and a second camera 504 is known, and an image corresponding to an object 506 is shot by the first camera 502 and the second camera 504, respectively. A first included angle $A_1$ and a second included angle A2 may be acquired according to the image, and a vertical intersection between a horizontal line from the first camera 502 to the second camera 504 and the object 502 is an intersection 508. When a distance from the first camera 502 to the intersection 508 is $T_x$, a distance from the intersection 508 to the second camera 504 is $T_c$-$T_x$ and depth information of the object 506, i.e., a vertical distance from the object 506 to the intersection 508, is $T_s$. According to a triangle formed by the first camera 502, the object 506 and the intersection 508, the following formula may be obtained:

$$CotA_1 = \frac{T_x}{T_s}.$$

Similarly, according to a triangle formed by the second camera 504, the object 506 and the intersection 508, the following formula may be obtained:

$$CotA_2 = \frac{T_c - T_x}{T_s}.$$

The depth information of the object 506 may be obtained according to the above formulae:

$$T_s = \frac{T_c}{CotA_1 + CotA_2}.$$

In an embodiment, when the race feature parameter corresponding to the face region is acquired, a skin color corresponding to the face region may be detected at first, and then the acquired skin color is input into the race recognition model to obtain the race feature parameter. The skin color refers to a color of a skin region corresponding to the face region. A method for acquiring the skin color may specifically include that: a color histogram is generated according to the face region; a peak value of the color histogram is acquired, and a skin color interval is acquired according to the peak value; and the color skin is acquired according to the acquired skin color interval. The color histogram may be configured to describe proportions of different colors in the face region. A color space may be divided into multiple small color intervals, and the number of the pixels within each color interval in the face region is separately calculated to obtain the color histogram. In the example, the color histogram may be, but not limited to, an RGB color histogram, a Hue, Saturation and Value (HSV) color histogram, a Luma and Chroma (YUV) color histogram or the like. A wave peak refers to maximum amplitude values of a wave formed on the color histogram. The wave peak may be determined by calculating a first-order difference of each point in the color histogram, and the peak value is a maximum value on the wave peak. FIG. 6 is a color histogram generated according to an embodiment of the disclosure.

As illustrated in FIG. 6, the ordinate axis of the color histogram represents a distribution condition of the pixels, i.e., the number of the pixels of the corresponding color, and the abscissa axis represents a feature vector of an HSV color space, i.e., multiple color intervals formed by dividing the HSV color space. It can be seen that the color histogram in FIG. 6 includes a wave peak 602, a peak value corresponding to the wave peak 602 is 850, a color interval corresponding to the peak value is 150 and the color interval 150 is determined as a skin color interval.

At block 408, the facial feature parameter is sent to a second processing unit of the terminal, and the image to be processed is sent to a third processing unit of the terminal.

Specifically, the image to be processed may not be wholly processed, and instead, beauty processing is only performed on a certain region. For example, beauty processing is only performed on the face region, a portrait region or the skin region. When two or more face regions exist in the image to be processed, figure attribute features of each face region may be different, and a facial feature parameter of each face region may be acquired. Then, beauty processing is independently performed on each target region. The target region is a region to be retouched and includes, but not limited to, the face region, the portrait region, the skin region, a lip region and the like. Specifically, each face region is traversed, the facial feature parameter corresponding to each face region is acquired through the feature recognition model, and a target beauty parameter corresponding to each target region is acquired though the feature recognition parameter. For example, the image to be processed includes a portrait 1, a portrait 2 and a portrait 3, a figure attribute feature of the portrait 1 is tender age, a figure attribute feature of the portrait 2 is youth and a figure attribute feature of the portrait 3 is old age. The detected face regions may be marked by face identifiers, and each face identifier corresponds to a face coordinate. The face coordinates refer to coordinates for representing positions of the face regions in the image to be processed. For example, the face coordinates may be coordinates of positions of central pixels of the face regions in the image to be processed, and may also be coordinates of positions of pixels in left corners in the image to be processed. A corresponding relationship between the acquired facial feature parameters and the face identifiers is established. During beauty processing, the corresponding facial feature parameters are acquired through the face identifiers, and specific positions of faces are acquired through the face coordinates. For example, it is detected that an image to be processed "pic.jpg" includes three face regions, i.e., a face 1, a face 2 and a face 3, the three face regions have corresponding face identifiers, i.e., face1, face2 and face3, and have corresponding target beauty parameters, i.e., level-1 whitening, level-2 whitening and level-1 acne removal.

It can be understood that, during beauty processing, a region area corresponding to the target region may be acquired. When the region area is smaller than an area threshold value, beauty processing is not performed and beauty processing is only performed on the target region of which the region area is larger than the area threshold value. The target region is formed by a plurality of pixels, and the area of the target region may be represented as the total number of the pixels included in the target region and may also be represented as a proportion of the area of the target region to the area of the corresponding image to be processed. For example, when beauty processing is performed on face regions, areas of the face regions in the image may be different. In general, an area of a main face required to be highlighted is relatively large, and face areas of passers-by are relatively small. When an area of a face is relatively smaller and filtering processing or the like is performed, the five sense organs of the face in the processed image may become blurry. When beauty processing is only performed on the target region in the image to be processed and beauty processing is not performed on other regions except the target region in the image to be processed, obvious differences may exist between the target region and the other regions after processing. For example, after whitening processing is performed on the target region, brightness of the target region is obviously higher than brightness of the other regions. As a result, the image looks not so natural. Then, transition processing may be performed on a boundary of the target region in the generated beauty image to make the obtained beauty image look more natural.

At block 410, through the ISP unit of the terminal, an environmental parameter corresponding to the image to be processed is acquired and the environmental parameter is uploaded to the second processing unit.

In an embodiment, the environmental parameter may include environmental brightness and environmental color temperature. The ISP unit may process the image to be processed and acquire the environmental brightness and environmental color temperature corresponding to the image to be processed. For example, a Region of Interest (ROI) in the image to be processed may be acquired, statistics is made on brightness values of the ROI and the whole image to be processed, and weighted averaging is performed according to average brightness of the ROI and average brightness of the image to be processed to obtain the environmental brightness corresponding to the image to be processed. In the example, the ROI refers to a region to which a user pays attention, for example, the face region and focusing region in the image.

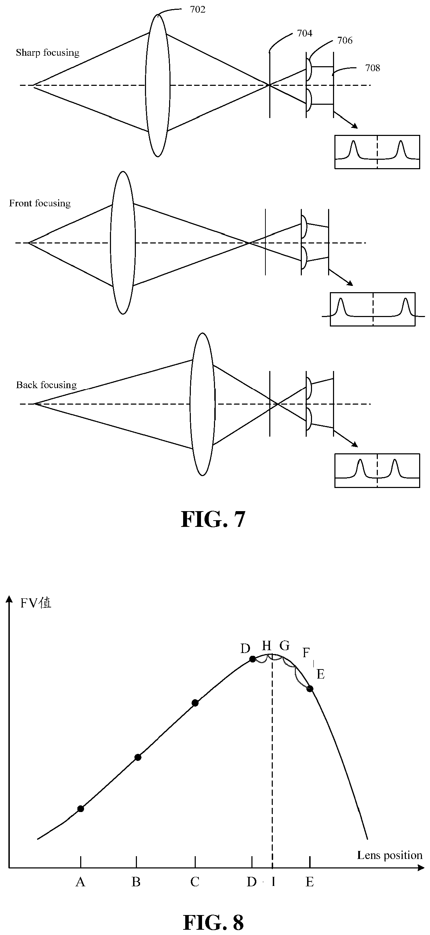

Specifically, when the focusing region is taken as the ROI, the focusing region may be acquired through an automatic focusing algorithm and may also be acquired through an operation instruction input by the user. The automatic focusing algorithm may usually include a phase detection automatic focusing (PDAF) algorithm, a contrast detection automatic focusing algorithm, a laser detection automatic focusing algorithm and the like. In a PDAF process, a grid plate may be placed at a position of the image sensor of the image acquisition device, lines of the grid plate are successively non-lighttight and lighttight and a light receiving component is correspondingly placed, so as to form a linear sensor. Light of the object is concentrated by the lens and separated into two images by a separation lens. The two images may reach the linear sensor respectively, and the linear sensor receives image signals and determines a phase difference value according to the image signals. In a sharp focusing state, the two images reach the linear sensor at the same time. In front focusing and back focusing states, the two images sequentially reach the linear sensor, and the linear sensor determines the phase difference value according to the received signals. FIG. 7 is a schematic diagram of phase detection automatic focusing according to an embodiment of the disclosure. As illustrated in FIG. 7, in the phase detection automatic focusing process, three states may exist in an imaging process of the object, i.e., the sharp focusing, front focusing and back focusing states. Light of an object is concentrated through a lens 702, and the light passes through a separation lens 706 to generate two images in a linear sensor 708. A phase difference value may be acquired according to positions of the two images. Then, an imaging state is determined according to the phase difference value, and a position of the lens 702 is further regulated for focusing. In the sharp focusing state, after the light is concentrated through the lens 702, a focal point is concentrated on an imaging plane 704, such that an image formed on the imaging plane 704 is sharpest. In the front focusing state, after the light is concentrated through the lens 702, the focal point is concentrated before the imaging plane 704, and the image on the imaging plane 704 is blurry. In the back focusing state, after the light is concentrated through the lens 702, the focal point is concentrated after the imaging plane 704, and the image on the imaging plane 704 is blurry.

In a contrast detection automatic focusing process, the lens in the image acquisition device may keep moving for scanning. Every time when the lens moves in a scanning process, one image is output and a Focus Value (FV) corresponding to the image is calculated. The FV may reflect sharpness of the shot image, and an optimal shooting position of the lens may be found according to the FV For example, a motor drives a position of the lens to be changed from 200 to 600, one FV may be acquired by movement of one step every time. When a movement length of each step is 40, totally 10 steps are required, that is, 10 FVs are acquired. After pre-scanning is completed, a position interval of a sharp focusing position of the lens may be determined, and then accurate scanning is performed in this position interval to determine an accurate sharp focusing position. In pre-scanning and accurate scanning processes, a relationship curve with the position of the lens may be drawn according to the FVs acquired by scanning, and then the sharp focusing position of the lens is acquired according to the relationship curve. FIG. 8 is a schematic diagram of a contrast detection automatic focusing process according to an embodiment of the disclosure. As illustrated in FIG. 8, the automatic focusing process is divided into two stages: pre-scanning and accurate scanning. A scanning process from point A to point E is the pre-scanning process, and a scanning process from point E to point D is the accurate scanning process. Specifically, in the pre-scanning process, the motor may drive the lens to move by a relatively large step length, for example, moving by 40 step lengths every time. From pre-scanning, every time when the lens moves, a corresponding FV is acquired, and the pre-scanning process is performed until the FV starts decreasing. Five points A, B, C, D and E are acquired. In a scanning process from the point A to the point D, the FV gradually increases, and it is indicated that the sharpness of the image becomes higher and higher. In a scanning process from the point D to the point E, the FV decreases, and it is indicated that the sharpness of the image is reduced. Then, the accurate scanning process is entered, and the motor drives the lens to move by a relatively small step length, for example, moving by 10 step lengths every time. In the accurate scanning process, only a region from the point E to the point D is required to be scanned, and one FV is acquired every time when the lens moves. In the accurate scanning process, five points E, F, G, H and D are acquired. In a scanning process from the point E to the point H, the FV gradually increases, and it is indicated that the sharpness of the image becomes higher and higher. In a scanning process from the point H to the point D, the FV decreases, and it is indicated that the sharpness of the image is reduced. A fitting curve is drawn according to the three points G, H and D. The fitting curve may describe a change rule of the FV, and the lens position corresponding to a vertex, i.e., a point I, of the fitting curve is taken as the optimal sharp focusing position for shooting.

At block 412, the facial feature parameter sent by the first processing unit is received through the second processing unit, and the environmental parameter uploaded by the ISP unit is received through the second processing unit.

Specifically, the process that the first processing unit acquires the facial feature parameter may be implemented through a code set, and the code set is encapsulated into a feature function. When the facial feature parameter is required to be acquired, an interface of the feature function is directly called for acquisition. It can be understood that a function may usually have input data and then output data according to the input data. When the facial feature parameter is acquired, the image to be processed may be taken as input of the feature function, and the facial feature parameter output by the feature function is acquired. The second processing unit may directly acquire the facial feature parameter through the interface of the feature function.

At block 414, a first beauty parameter is acquired according to the facial feature parameter, and a second beauty parameter is acquired according to the environmental parameter.

In an embodiment, a corresponding relationship between facial feature parameters and first beauty parameters and a corresponding relationship between environmental parameters and second beauty parameters are pre-established. After the facial feature parameter is acquired, the corresponding first beauty parameter may be acquired according to the facial feature parameter. For example, when the face region is recognized to be a male, filtering processing may be performed on the face region; and when the face region is recognized to be a female, makeup processing may be performed on the face region. After the environmental parameter is acquired, the corresponding second beauty parameter may be acquired according to the environmental parameter. For example, when a present environmental color temperature is recognized to be yellowish, the skin color may be correspondingly regulated.

At block 416, a target beauty parameter is acquired according to the first beauty parameter and the second beauty parameter, and the target beauty parameter is sent to the third processing unit of the terminal.

It can be understood that the first beauty parameter is acquired according to the facial feature parameter, the second beauty parameter is acquired according to the environmental parameter, beauty processing may be separately performed on the image to be processed according to the first beauty parameter and the second beauty parameter, and beauty processing may also be performed on the image to be processed in a weighted combination manner according to both of the first beauty parameter and the second beauty parameter. For example, when the first beauty parameter is for increasing whiteness of the face by 20% and the second beauty parameter is for decreasing the whiteness of the face by 10%, the image is processed through the target beauty parameter generated by the first beauty parameter and the second beauty parameter. The whiteness of the face may be increased by 20% at first, and then the whiteness of the face is decreased by 10%. The whiteness of the face may also be processed only once in a weighted manner. For example, when weights of the first beauty parameter and the second beauty parameter are 0.6 and 0.4 respectively, the obtained target beauty parameter is for increasing the whiteness of the face by 0.6*20%-0.4*10%=8%, that is, the whiteness of the face is finally required to be increased by 8% during beauty processing.

In an embodiment, a beauty degree parameter set by the user may also be acquired, and the beauty degree parameter is sent to the third processing unit of the terminal. The beauty degree parameter is a parameter for representing a degree of beauty processing on the image. For example, beauty processing may be divided into level 1, level 2, level 3, level 4 and level 5, and beauty processing degrees progressively increase from level 1 to level 5. When performing beauty processing on the image, the third processing unit may perform beauty processing of different degrees on the image according to the beauty degree parameter.

In the embodiment provided by the disclosure, the acquired target beauty parameter may be acquired correspondingly to each color channel of the image to be processed, and then each color channel image corresponding to the image to be processed is processed according to the target beauty parameter of each color channel. For example, a color channel of the image to be processed may be formed by three channels RGB and may also be formed by three channels Cyan Magenta Yellow (CMY). Target beauty parameters corresponding to the three channels RGB are acquired respectively, and beauty processing is separately performed on the three channels RGB through the acquired target beauty parameters. In an image processing process, each color component of the image may be extracted through a function, and each color component may be processed. For example, an image named "rainbow.jpg" is read from Matlab through an imread() function, and if it is set that im=imread('rainbow.jpg'), color components RGB may be extracted through functions r=im(:,:,1), g=im(:,:,2) and b=im(:,:,3). The channel images are images formed by pixels of each color channel in the image to be processed. When beauty processing is performed on the image, beauty processing may be performed on each color channel of the image, and processing on each color channel may be different.

Specifically, the target beauty parameter may be quantized, a noisy point number corresponding to each channel image of the image to be processed is acquired, and the corresponding target beauty parameter is acquired through the noisy point number corresponding to each channel image. The noisy point number is the number of noise pixels in the image to be processed. In general, when the noisy point number is larger, the image is distorted more seriously and the corresponding target beauty parameter is larger. For example, when filtering processing is performed on the image, beauty levels are quantized to be level 1, level 2 and level 3, and degrees of filtering processing from level 1 to level 3 gradually increase. When the noisy point number corresponding to the channel image G is larger, the corresponding beauty level is higher.

A brightness value corresponding to each channel image of the image to be processed may further be acquired, and the corresponding target beauty parameter is acquired through the noisy point number corresponding to each channel image. Brightness refers to brightness of the image, and the brightness value may reflect a deviation degree of the image. A method for acquiring the beauty degree parameter according to the brightness value may specifically include that: a brightness reference value corresponding to each channel image is acquired, and the target beauty parameter of each channel image is acquired according to difference values between the acquired brightness values and brightness reference values. For example, standard RGB channel values of the skin color may be set at first, and it is assumed that the standard RGB channel values corresponding to the skin color are 233, 206 and 188, respectively. Then, when whitening processing is performed on the skin region, brightness values of the three channels RGB may be acquired respectively, and the brightness values are compared with the standard channel values. When the channels have greater differences, corresponding whitening degrees are higher, that is, the corresponding target beauty parameters are larger.

At block 418, through the third processing unit, the target beauty parameter sent by the second processing unit is received, and the image to be processed sent by the first processing unit is received.

At block 420, a flag bit of each beauty module in the third processing unit is assigned with a value according to the target beauty parameter, the beauty module for beauty processing is acquired according to the value of the flag bit of each beauty module, and the target beauty parameter is input into the acquired beauty module to perform beauty processing on the image to be processed.

In an embodiment, the third processing unit includes multiple beauty modules, and each beauty module may perform a kind of beauty processing. For example, the third processing unit may include a filtering module, a whitening module, an eye widening module, a face-lift module and a skin color regulation module, which may perform filtering processing, whitening processing, eye widening processing, face-lift processing and skin color regulation processing on the image to be processed respectively. Specifically, each beauty module may be a function module, and beauty processing on the image is implemented through the function module. Each function module corresponds to a flag bit, and it is determined whether to perform corresponding processing through the flag bit. For example, each beauty module corresponds to a flag bit Stat, and when a value of the flag bit Stat is 1 or ture, it is indicated that beauty processing corresponding to the beauty module is required to be performed. When the value of the flag bit Stat is 0 or fals, it is indicated that beauty processing corresponding to the beauty module is not required to be performed.

Specifically, the flag bit of each beauty module is assigned with the value according to the target beauty parameter, the beauty module for beauty processing is acquired according to the flag bits, and the target beauty parameter is input into each acquired beauty module to perform beauty processing on the image to be processed. For example, when the target beauty parameter includes whitening processing on the face, the flag bit corresponding to the whitening module is assigned with a value of 1, and when eye widening processing is not required to be performed, the flag bit corresponding to the eye widening module is assigned with a value of 0. When beauty processing is performed, each beauty module is traversed to determine whether corresponding processing is required to be performed according to the flag bit. It can be understood that beauty processing performed by each beauty module is independent of each other and does not interfere with each other. When multiple kinds of beauty processing are required to be performed on the image, the image may be processed sequentially through each beauty module to obtain a final beauty image.

According to the image processing method provided by the embodiment, the facial feature parameter of the image to be processed may be acquired through the first processing unit of the terminal, the target beauty parameter is obtained through the second processing unit according to the facial feature parameter and the environmental parameter, and beauty processing is performed on the image to be processed through the third processing unit according to the target beauty parameter. Beauty processing may be performed according to different features of the image to be processed, and processing accuracy of the image to be processed is improved.

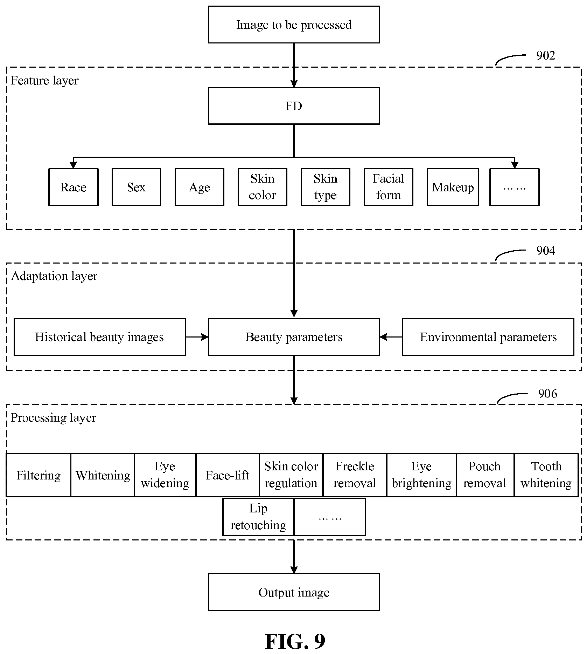

In an embodiment, a first processing unit, a second processing unit and a third processing unit of an image processing system may refer to a feature layer, an adaptation layer and a processing layer, respectively. The feature layer is configured to extract a feature in an image to be processed, the adaptation layer is configured to acquire a target beauty parameter for performing beauty processing on the image according to the extracted feature, and the processing layer is configured to perform beauty processing on the image to be processed according to the acquired target beauty parameter. FIG. 9 is a schematic structure diagram of an image processing system according to an embodiment of the disclosure. As illustrated in FIG. 9, the image processing system includes a feature layer 902, an adaptation layer 904 and a processing layer 906. The feature layer 902 is configured to acquire an image to be processed, perform FD on the image to be processed and acquire a corresponding facial feature parameter according to a face region obtained by the FD. The facial feature parameter may include one or more of a race feature parameter, a sex feature parameter, an age feature parameter, a skin color feature parameter, a skin type feature parameter, a facial feature parameter and a makeup feature parameter, which will not be limited herein. The feature layer 902 sends the acquired facial feature parameter to the adaptation layer 904, and the adaptation layer 904 acquires a corresponding target beauty parameter according to historical beauty images of a user, an environmental parameter corresponding to the image to be processed and the facial feature parameter and sends the target beauty parameter to the processing layer 906. The processing layer 906 performs beauty processing on the image to be processed according to the received target beauty parameter and outputs the image retouched through the beauty processing. The beauty processing may include, but not limited to, processing of filtering, whitening, eye widening, face-lift, skin color regulation, acne removal, eye brightening, pouch removal, tooth whitening, lip retouching and the like.

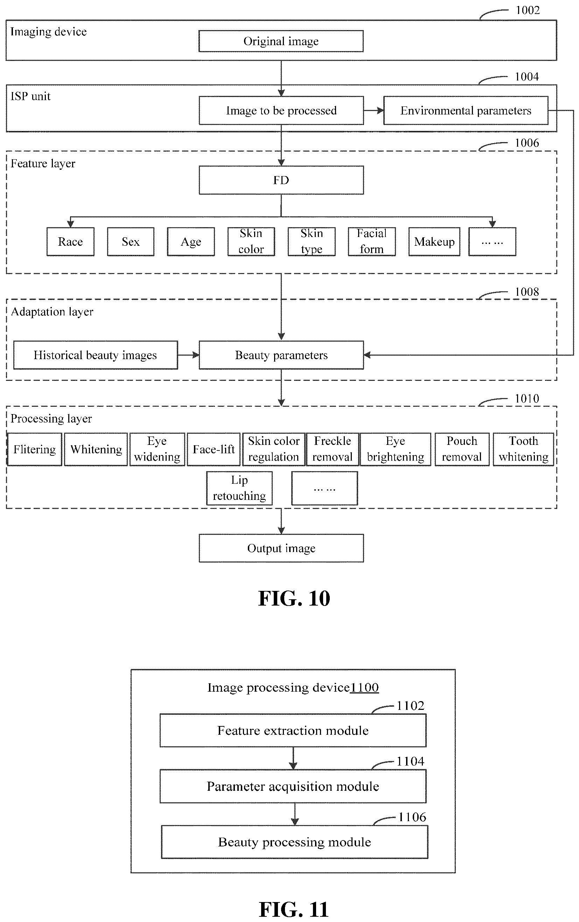

FIG. 10 is a schematic structure diagram of an image processing system according to another embodiment of the disclosure. As illustrated in FIG. 10, the image processing system includes an imaging device 1001, an ISP unit 1004, a feature layer 1006, an adaptation layer 1008 and a processing layer 1010. The image device 1002 may be configured to generate an original image and send the original image to the ISP unit 1004. The ISP unit 1004 performs a series of processing such as denoising, correction, white balance and color space conversion on the original image to obtain an image to be processed and a corresponding environmental parameter, sends the image to be processed to the feature layer 1006 and sends the corresponding environmental parameter to the processing layer 1010. The feature layer 1006, after receiving the image to be processed, performs FD on the image to be processed, acquires a facial feature parameter corresponding to a face region obtained by the FD and sends the acquired facial feature parameter to the adaptation layer 1008. The adaptation layer 1008, after receiving the facial feature parameter sent by the feature layer 1006 and the environmental parameter sent by the ISP unit 1004, acquires a corresponding target beauty parameter according to historical beauty images of a user, the environmental parameter and the facial feature parameter corresponding to the image to be processed and sends the target beauty parameter to the processing layer 1010. The processing layer 1010 performs beauty processing on the image to be processed according to the received target beauty parameter and then outputs the image retouched through the beauty processing.

FIG. 11 is a schematic structure diagram of an image processing device according to an embodiment of the disclosure. As illustrated in FIG. 11, the image processing device 1100 includes a feature extraction module 1102, a parameter acquisition module 1104 and a beauty processing module 1106.

The feature extraction module 1102 may be configured to, through a first processing unit of a terminal, acquire an image to be processed, acquire a facial feature parameter according to the image to be processed, send the facial feature parameter to a second processing unit of the terminal and send the image to be processed to a third processing unit of the terminal.

The parameter acquisition module 1104 may be configured to, through the second processing unit, receive the facial feature parameter sent by the first processing unit, acquire an environmental parameter corresponding to the image to be processed, acquire a target beauty parameter according to the facial feature parameter and the environmental parameter and send the target beauty parameter to the third processing unit of the terminal.

The beauty processing module 1106 may be configured to, through the third processing unit, receive the target beauty parameter sent by the second processing unit, receive the image to be processed sent by the first processing unit and perform beauty processing on the image to be processed according to the target beauty parameter.

According to the image processing device provided by the embodiment, the facial feature parameter of the image to be processed may be acquired through the first processing unit of the terminal, the target beauty parameter is obtained through the second processing unit according to the facial feature parameter and the environmental parameter, and beauty processing is performed on the image to be processed through the third processing unit according to the target beauty parameter. Beauty processing may be performed according to different features of the image to be processed, and processing accuracy of the image to be processed is improved.

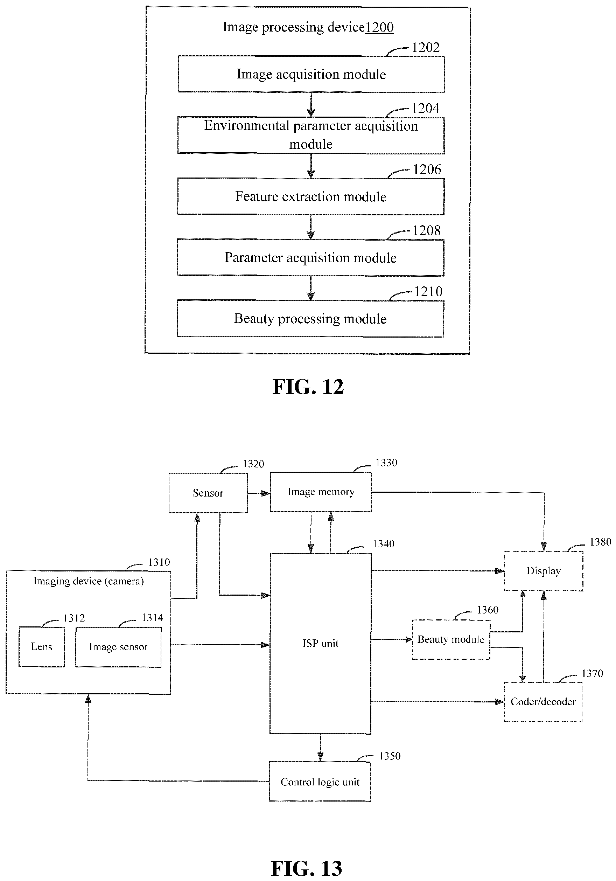

FIG. 12 is a schematic structure diagram of an image processing device according to another embodiment of the disclosure. As illustrated in FIG. 12, the image processing device 1200 includes an image acquisition module 1202, an environmental parameter uploading module 1204, a feature extraction module 1206, a parameter acquisition module 1208 and a beauty processing module 1210.

The image acquisition module 1202 may be configured to, through an ISP unit of a terminal, acquire an original image generated by an imaging device, generate an image to be processed according to the original image and upload the image to be processed to a first processing unit of the terminal.

The environmental parameter acquisition module 1204 may be configured to, through the ISP unit of the terminal, acquire an environmental parameter corresponding to the image to be processed and upload the environmental parameter to a second processing unit of the terminal.

The feature extraction module 1206 may be configured to, through the first processing unit of the terminal, receive the image to be processed uploaded by the ISP unit, acquire a facial feature parameter according to the image to be processed, send the facial feature parameter to the second processing unit of the terminal and send the image to be processed to a third processing unit of the terminal.

The parameter acquisition module 1208 may be configured to, through the second processing unit, receive the facial feature parameter sent by the first processing unit, receive the environmental parameter uploaded by the ISP unit, acquire a target beauty parameter according to the facial feature parameter and the environmental parameter and send the target beauty parameter to the third processing unit of the terminal.

The beauty processing module 1210 may be configured to, through the third processing unit, receive the target beauty parameter sent by the second processing unit, receive the image to be processed sent by the first processing unit and perform beauty processing on the image to be processed according to the target beauty parameter.

According to the image processing device provided by the embodiment, the facial feature parameter of the image to be processed may be acquired through the first processing unit of the terminal, the target beauty parameter is obtained by the second processing unit according to the facial feature parameter and the environmental parameter, and beauty processing is performed on the image to be processed by the third processing unit according to the target beauty parameter. Beauty processing may be performed according to different features of the image to be processed, and processing accuracy of the image to be processed is improved.

In an embodiment, the feature extraction module 1206 may be further configured to detect a face region in the image to be processed and acquire a facial feature parameter corresponding to the face region through a feature recognition model. In the example, the feature recognition model may be obtained through a set of face samples.

In an embodiment, the parameter acquisition module 1208 may be further configured to acquire a first beauty parameter according to the facial feature parameter, acquire a second beauty parameter according to the environmental parameter and acquire the target beauty parameter according to the first beauty parameter and the second beauty parameter.

In an embodiment, the parameter acquisition module 1208 may be further configured to: send, through the first processing unit, the image to be processed to the second processing unit; receive, through the second processing unit, the image to be processed and acquire a third beauty parameter corresponding to the image to be processed according to a historical parameter model, wherein the historical parameter model is obtained according to historical beauty images; and acquire the target beauty parameter according to the first beauty parameter, the second beauty parameter and the third beauty parameter.

In an embodiment, the beauty processing module 1210 may be further configured to assign a flag bit of each beauty module in the third processing unit with a value according to the target beauty parameter, acquire the beauty module for performing beauty processing according to the value of the flag bit of each beauty module and input the target beauty parameter into the acquired beauty module to perform beauty processing on the image to be processed.

Modules in the image processing device are divided only for exemplary description. In another embodiment of the discloure, the image processing device may be divided into different modules as required to realize all or part of functions of the image processing device.

An embodiment of the disclosure further provides a computer-readable storage medium. The computer-readable storage medium may be a nonvolatile computer-readable storage medium including one or more computer programs. The computer programs are executed by one or more processors to cause the processors to execute the following operations.

An image to be processed is acquired through a first processing unit of a terminal, a facial feature parameter is acquired according to the image to be processed, the facial feature parameter is sent to a second processing unit of the terminal, and the image to be processed is sent to a third processing unit of the terminal.

The facial feature parameter sent by the first processing unit is received through the second processing unit, an environmental parameter corresponding to the image to be processed is acquired, a target beauty parameter is acquired according to the facial feature parameter and the environmental parameter, and the target beauty parameter is sent to the third processing unit of the terminal.

The target beauty parameter sent by the second processing unit is received through the third processing unit, the image to be processed sent by the first processing unit is received, and beauty processing is performed on the image to be processed according to the target beauty parameter.

In an embodiment, the operation, executed by the processors, that the image to be processed is acquired further includes that: an original image generated by an imaging device is acquired through an ISP unit of the terminal, the image to be processed is generated according to the original image, and the image to be processed is uploaded to the first processing unit of the terminal; and the image to be processed uploaded by the ISP unit is received through the first processing unit of the terminal.

In an embodiment, the operation, executed by the processors, that the image to be processed is acquired further includes that: a beauty instruction is received from a user through the first processing unit of the terminal; and the image to be processed is acquired according to the beauty instruction, wherein the beauty instruction includes an image identifier.

In an embodiment, the operation, executed by the processors, that the facial feature parameter is acquired according to the image to be processed includes that: a face region in the image to be processed is detected, and a facial feature parameter corresponding to the face region is acquired through a feature recognition model. The feature recognition model is obtained through a set of face samples, and the facial feature parameter may include at least one of the following: a race feature parameter, a sex feature parameter, an age feature parameter, a skin color feature parameter, a skin type feature parameter, a facial feature parameter or a makeup feature parameter.

In an embodiment, the operation, executed by the processors, that the target beauty parameter is acquired according to the facial feature parameter and the environmental parameter includes that: a first beauty parameter is acquired according to the facial feature parameter, and a second beauty parameter is acquired according to the environmental parameter; and the target beauty parameter is acquired according to the first beauty parameter and the second beauty parameter.

In an embodiment, the method executed by the processors further includes the following operations. The image to be processed is sent to the second processing unit through the first processing unit. The image to be processed is received through the second processing unit, and a third beauty parameter corresponding to the image to be processed is acquired according to a historical parameter model, wherein the historical parameter model is obtained according to historical beauty images.

The operation that the target beauty parameter is acquired according to the first beauty parameter and the second beauty parameter includes that: the target beauty parameter is acquired according to the first beauty parameter, the second beauty parameter and the third beauty parameter.

In an embodiment, the operation executed by the processors that the environmental parameter corresponding to the image to be processed is acquired further includes that: through the ISP unit of the terminal, the environmental parameter corresponding to the image to be processed is acquired, the environmental parameter is uploaded to the second processing unit, and the environmental parameter uploaded by the ISP unit is received through the second processing unit. The environmental parameter may include at least one of environmental brightness or an environmental color temperature.

In an embodiment, the operation, executed by the processors, that beauty processing is performed on the image to be processed according to the target beauty parameter includes that: a flag bit of each beauty module is assigned with a value according to the target beauty parameter; the beauty module for performing beauty processing is acquired according to the value of the flag bit of each beauty module; and the target beauty parameter is input into the acquired beauty module to perform beauty processing on the image to be processed.

In the invention, the method executed by the processors further includes the following operations. After the face region in the image to be processed is detected, a physical attribute parameter corresponding to the face region is acquired and a face region required to be retouched is acquired according to the physical attribute parameter. The physical attribute parameter comprises at least one of a region area of the face region or depth information corresponding to the face region.

An embodiment of the disclosure further provides a computer device. The computer device includes an image processing circuit. The image processing circuit may be implemented by virtue of hardware and/software components and may include various processing units defining ISP pipelines. FIG. 13 is a schematic diagram of an image processing circuit according to an embodiment of the disclosure. As illustrated in FIG. 13, each aspect of an image processing technology related to the embodiments of the disclosure is illustrated only, for convenient description.

As illustrated in FIG. 13, the image processing circuit includes an ISP unit 1340 and a control logic unit 1350. Image data captured by an imaging device 1310 is processed by the ISP unit 1340 firstly, and the ISP unit 1340 analyzes the image data to capture image statistical information, the image statistical information being available for determining one or more control parameters of the ISP unit 1340 and/or the imaging device 1310. The imaging device 1310 may include a camera with one or more lenses 1312 and an image sensor 1314. The image sensor 1314 may include a array of color filters (for example, a Bayer filter). The image sensor 1314 may acquire light intensity and wavelength information captured by each imaging pixel of the image sensor 1314 and provide a set of original image data that may be processed by the ISP unit 1340. A sensor 1320 (for example, a gyroscope) may provide a parameter (for example, a stabilization parameter) for processing of an acquired image to the ISP unit 1340 based on an interface type of the sensor 1320. An interface of the sensor 1320 may adopt a Standard Mobile Imaging Architecture (SMIA) interface, other serial or parallel camera interface or a combination thereof.

In addition, the image sensor 1314 may also send the original image data to the sensor 1320. The sensor 1320 may provide the original image data to the ISP unit 1340 based on the interface type of the sensor 1320, or the sensor 1320 stores the original image data in an image memory 1330.

The ISP unit 1340 processes the original image data pixel by pixel in various formats. For example, each image pixel may have a bit depth of 8, 10, 12 or 14 bits. The ISP unit 1340 may perform one or more image processing operations on the original image data and collect statistical information about the image data. The image processing operations may be executed according to the same or different bit depth accuracy.

The ISP unit 1340 may further receive the image data from the image memory 1330. For example, the interface of the sensor 1320 sends the original image data to the image memory 1330, and the original image data in the image memory 1330 is provided to the ISP unit 1340 for processing. The image memory 1330 may be a part of a memory device, storage equipment or an independent dedicated memory in the electronic device, and may include a Direct Memory Access (DMA) feature.

When receiving the original image data from an interface of the image sensor 1314 or from the interface of the sensor 1320 or from the image memory 1330, the ISP unit 1340 may perform one or more image processing operations, for example, time-domain filtering. The processed image data may be sent to the image memory 1330 for performing other processing before displaying.

The ISP unit 1340 may further receive the processed data from the image memory 1330 and perform image data processing in an original domain and color spaces of RGB and YCbCr on the processed data. The processed image data may be output to a display 1380 for a user to view and/or for other processing by a Graphics Processing Unit (GPU). In addition, output of the ISP unit 1340 may further be sent to the image memory 1330, and the display 1380 may read the image data from the image memory 1330. In an embodiment, the image memory 1330 may be configured to implement one or more frame buffers. Moreover, the output of the ISP unit 1340 may be sent to a coder/decoder 1370 to code/decode the image data. The coded image data may be stored, and may be decompressed before being displayed on the display 1380.

The operation that the ISP 1340 processes the image data includes that: Video Front End (VFE) processing and Camera Post Processing (CPP) are performed on the image data. The VFE processing on the image data may include correction of a contrast or brightness value of the image data, modification of illumination state data recorded in a digital manner, compensation processing (for example, white balance, automatic gain control and $\gamma$ correction) on the image data, filtering processing on the image data and the like. The CPP on the image data may include scaling of the image and provision of a preview frame and a recording frame for each path, In the example, the CPP may process the preview frame and the recording frame with different codecs. The image data processed by the ISP unit 1340 may be sent to a beauty module 1360 for beauty processing on the image before being displayed. The beauty processing performed by the beauty module 1360 on the image data may include whitening, freckle removing, filtering, face-lift, acne removing, eye widening and the like. The beauty module 1360 may be a Central Processing Unit (CPU), GPU, coprocessor or the like in a mobile terminal. The data processed by the beauty module 1360 may be sent to the coder/decoder 1370 for coding/decoding the image data. The coded image data may be stored, and may be decompressed before being displayed on the display 1380. The beauty module 1360 may also be positioned between the coder/decoder 1370 and the display 1380, that is, the beauty module performs beauty processing on the image that has been imaged. The coder/decoder 1370 may be the CPU, GPU, coprocessor or the like in the mobile terminal.

Statistical data determined by the ISP unit 1340 may be sent to the control logic unit 1350. For example, the statistical data may include statistical information about automatic exposure, automatic white balance, automatic focusing, scintillation detection, black level compensation, shading correction of the lens 1312 and the like of the image sensor 1314. The control logic unit 1350 may include a processor and/microcontroller for executing one or more routines (for example, firmware), and the one or more routines may determine control parameters of the imaging device 1310 and control parameters of the ISP unit 1340 according to the received statistical data. For example, the control parameters of the imaging device 1310 may include control parameters (for example, integral time for gain and exposure control) for the sensor 1320, a camera scintillation control parameter, a control parameter (for example, a focal length for focusing or zooming) for the lens 1312 or a combination of these parameters. The control parameters for the ISP unit may include a gain level and color correction matrix for automatic white balance and color regulation (for example, during RGB processing) and a shading correction parameter for the lens 1312.

The image processing method provided by the abovementioned embodiment may be implemented by use of the image processing technology in FIG. 13.

A computer program product including an instruction runs on a computer to cause the computer to execute the image processing method provided by the abovementioned embodiment.

Any memory, storage, a database or another medium used in the disclosure may include transitory and/or non-transitory memories. A proper non-transitory memory may include a Read-Only Memory (ROM), a Programmable ROM (PROM), an Electrically Programmable ROM (EPROM), an Electrically Erasable Programmable ROM (EEPROM) or a flash memory. The transitory memory may include a Random Access Memory (RAM), and is used as an external high-speed buffer memory. Exemplarily but unlimitedly, the RAM may be obtained in various forms, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Rambus Direct RAM (RDRAM), a Direct RDRAM (DRDRAM) and a Rambus Dynamic RAM (RDRAM).

The abovementioned embodiments only describes some implementation modes of the disclosure and are specifically described in detail, but it should not be understood as limits to the scope of the disclosure. It should be pointed out that those of ordinary skilled in the art may further make a plurality of transformations and improvements without departing from the concept of the disclosure and all of these fall within the scope of protection of the disclosure. Therefore, the scope of protection of the disclosure should be subject to the appended claims.

**Claims**

1. An image processing method, applied in a terminal and comprising:

    acquiring (202), through a first processing unit of the terminal, an image to be processed, acquiring a facial feature parameter according to the image to be processed, sending the facial feature parameter to a second processing unit of the terminal, and sending the image to be processed to a third processing unit of the terminal, wherein the facial feature parameter indicates a parameter for representing a figure attribute corresponding to a face in the image to be processed and comprises a race, a sex, an age and a skin type corresponding to the face;
    receiving (204), through the second processing unit, the facial feature parameter sent by the first processing unit, acquiring an environmental parameter corresponding to the image to be processed, acquiring a target beauty parameter according to the facial feature parameter and the environmental parameter, and sending the target beauty parameter to the third processing unit, wherein the environment parameter indicates a parameter related to an environment where the image to be processed is generated and comprises environmental brightness and an environmental color temperature; and
    receiving (206), through the third processing unit, the target beauty parameter sent by the second processing unit, receiving the image to be processed sent by the first processing unit, and performing beauty processing on the image to be processed according to the target beauty parameter, wherein the target beauty parameter indicates a parameter for beauty processing on the image to be processed and comprises a first beauty parameter corresponding to the facial feature parameter and a second beauty parameter corresponding to the environmental parameter,

wherein acquiring the target beauty parameter according to the facial feature parameter and the environmental parameter comprises:

    acquiring the first beauty parameter according to the facial feature parameter, acquiring the second beauty parameter according to the environmental parameter, and acquiring the target beauty parameter according to the first beauty parameter and the second beauty parameter;
    **characterized by**,
    wherein acquiring the facial feature parameter according to the image to be processed comprises:

        detecting a face region in the image to be processed;
        acquiring a physical attribute parameter corresponding to the face region, wherein the physical attribute parameter comprises at least one of a region area of the face region or depth information corresponding to the face region;

determining whether the face region is required to be retouched according to the physical attribute parameter; and responsive to determining that the face region is required to be retouched, acquiring the facial feature parameter corresponding to the face region required to be retouched through a feature recognition model.

2. The image processing method according to claim 1, wherein acquiring (202) the image to be processed comprises:

acquiring (402), through an Image Signal Processing, ISP, unit of the terminal, an original image generated by an imaging device, generating the image to be processed according to the original image, and uploading the image to be processed to the first processing unit of the terminal; and receiving (404), through the first processing unit of the terminal, the image to be processed uploaded by the ISP unit.

3. The image processing method according to claim 1, wherein acquiring (202) the image to be processed comprises:

receiving, through the first processing unit of the terminal, a beauty instruction from a user; and acquiring the image to be processed according to the beauty instruction, wherein the beauty instruction includes an image identifier.

4. The image processing method according to claim 1, wherein the feature recognition model is obtained according to a set of face samples.

5. The image processing method according to claim 1, further comprising:

sending (302), through the first processing unit, the image to be processed to the second processing unit; and receiving (304), through the second processing unit, the image to be processed, and acquiring a third beauty parameter corresponding to the image to be processed according to a historical parameter model, wherein the historical parameter model is obtained according to historical beauty images; wherein acquiring (204) the target beauty parameter according to the first beauty parameter and the second beauty parameter comprises: acquiring (306) the target beauty parameter according to the first beauty parameter, the second beauty parameter and the third beauty parameter.

6. The image processing method according to claim 1, wherein acquiring (204) the environmental parameter corresponding to the image to be processed comprises:

acquiring (410), through the ISP unit of the terminal, the environmental parameter corresponding to the image to be processed, and uploading the environmental parameter to the second processing unit; and receiving (412), through the second processing unit, the environmental parameter uploaded by the ISP unit.

7. The image processing method according to any one of claims 1-6, wherein performing (206) beauty processing on the image to be processed according to the target beauty parameter comprises:

assigning (420) a flag bit of each beauty module with a value according to the target beauty parameter; acquiring (420) the beauty module for perform beauty processing according to the value of the flag bit of each beauty module; and inputting (420) the target beauty parameter into the acquired beauty module to perform beauty processing on the image to be processed.

8. An image processing device, comprising:

a memory storing one or more computer programs; and a processor, configured to execute the one or more computer programs stored in the memory to enable the processor to execute the image processing method according to any one of claims 1-7.

9. A computer-readable storage medium, storing a computer program thereon, wherein the computer program is executed by a processor to implement the image processing method according to any one of claims 1-7.

**Patentansprüche**

1. Bildverarbeitungsverfahren, das in einem Endgerät angewendet wird und umfasst:

Erfassen (202) eines zu verarbeitenden Bildes über eine erste Verarbeitungseinheit des Endgeräts, Erfassen eines Gesichtsmerkmalsparameters gemäß dem zu verarbeitenden Bild, Senden des Gesichtsmerkmalsparameters an eine zweite Verarbeitungseinheit des Endgeräts und Senden des zu verarbeitenden Bildes an eine dritte Verarbeitungseinheit des Endgeräts, wobei der Gesichtsmerkmalsparameter einen Parameter zum Darstellen eines Figurenattributs anzeigt, das einem Gesicht im zu verarbeitenden Bild entspricht, und eine Rasse, ein Geschlecht, ein Alter und einen Haut-Typ umfasst, die dem Gesicht entsprechen;

Empfangen (204) des von der ersten Verarbeitungseinheit gesendeten Gesichtsmerkmalsparameters über die zweite Verarbeitungseinheit, Erfassen eines Umgebungsparameters, der dem zu verarbeitenden Bild entspricht, Erfassen eines Zielschönheitsparameters gemäß dem Gesichtsmerkmalsparameter und dem Umgebungsparameter und Senden des Zielschönheitsparameters an die dritte Verarbeitungseinheit, wobei der Umgebungsparameter einen Parameter in Bezug auf eine Umgebung anzeigt, in der das zu verarbeitende Bild erzeugt wird, und Umgebungshelligkeit und eine Umgebungsfarbtemperatur umfasst; und

Empfangen (206) des von der zweiten Verarbeitungseinheit gesendeten Zielschönheitsparameter über die dritte Verarbeitungseinheit, Empfangen des zu verarbeitenden Bildes, das von der ersten Verarbeitungseinheit gesendet wird, und Durchführen von Schönheitsverarbeitung am zu verarbeitenden Bild gemäß dem Zielschönheitsparameter, wobei der Zielschönheitsparameter einen Parameter zur Schönheitsverarbeitung am zu verarbeitenden Bild anzeigt und einen ersten Schönheitsparameter, der dem Gesichtsmerkmalsparameter entspricht, und einen zweiten Schönheitsparameter umfasst, der dem Umgebungsparameter entspricht,

wobei das Erfassen des Zielschönheitsparameters gemäß dem Gesichtsmerkmalsparameter und dem Umgebungsparameter umfasst:

Erfassen des ersten Schönheitsparameters gemäß dem Gesichtsmerkmalsparameter, Erfassen des zweiten Schönheitsparameters gemäß dem Umgebungsparameter und Erfassen des Zielschönheitsparameters gemäß dem ersten Schönheitsparameter und dem zweiten Schönheitsparameter, **gekennzeichnet durch**

wobei das Erfassen des Gesichtsmerkmalsparameters gemäß dem zu verarbeitenden Bild umfasst:

Erkennen einer Gesichtsregion im zu verarbeitenden Bild;

Erfassen eines Parameters physischer Attribute, der der Gesichtsregion entspricht, wobei der Parameter physischer Attribute mindestens eines von einem Regionsbereich der Gesichtsregion oder Tiefeninformationen umfasst, die der Gesichtsregion entsprechen;

Bestimmen, ob die Gesichtsregion retuschiert werden muss, gemäß dem Parameter physischer Attribute; und

Erfassen des Gesichtsmerkmalsparameters, der der Gesichtsregion entspricht, die retuschiert werden muss, über ein Merkmalserkennungsmodell in Reaktion auf ein Bestimmen, dass die Gesichtsregion retuschiert werden muss.

2. Bildverarbeitungsverfahren nach Anspruch 1, wobei das Erfassen (202) des zu verarbeitenden Bildes umfasst:

Erfassen (402) eines durch eine Bildgebungsvorrichtung erzeugten Originalbildes über eine Einheit zur Bildsignalverarbeitung, ISP, des Endgeräts, Erzeugen des zu verarbeitenden Bildes gemäß dem Originalbild und Hochladen des zu verarbeitenden Bildes auf die erste Verarbeitungseinheit des Endgeräts; und

Empfangen (404) des zu verarbeitenden Bildes, das von der ISP-Einheit hochgeladen wird, durch die erste Verarbeitungseinheit des Endgeräts.

3. Bildverarbeitungsverfahren nach Anspruch 1, wobei das Erfassen (202) des zu verarbeitenden Bildes umfasst:

Empfangen einer Schönheitsanweisung von einem Benutzer über die erste Verarbeitungseinheit des Endgeräts; und

Erfassen des zu verarbeitenden Bildes gemäß der Schönheitsanweisung, wobei die Schönheitsanweisung eine Bildkennung umfasst.

4. Bildverarbeitungsverfahren nach Anspruch 1, wobei das Merkmalserkennungsmodell gemäß einem Satz von Gesichtsproben erhalten wird.

5. Bildverarbeitungsverfahren nach Anspruch 1, ferner umfassend:

Senden (302) des zu verarbeitenden Bildes über die erste Verarbeitungseinheit an die zweite Verarbeitungseinheit; und

Empfangen (304) des zu verarbeitenden Bildes über die zweite Verarbeitungseinheit und Erfassen eines dritten Schönheitsparameters, der dem zu verarbeitenden Bild entspricht, gemäß einem historischen Parametermodell, wobei das historische Parametermodell gemäß historischen Schönheitsbildern erhalten wird;

wobei das Erfassen (204) des Zielschönheitsparameters gemäß dem ersten Schönheitsparameter und dem zweiten Schönheitsparameter umfasst:

Erfassen (306) des Zielschönheitsparameters gemäß dem ersten Schönheitsparameter, dem zweiten Schönheitsparameter und dem dritten Schönheitsparameter.

**6.** Bildverarbeitungsverfahren nach Anspruch 1, wobei das Erfassen (204) des Umgebungsparameters, der dem zu verarbeitenden Bild entspricht, umfasst:

Erfassen (410) des Umgebungsparameters, der dem zu verarbeitenden Bildes entspricht, über die ISP-Einheit des Endgeräts und Hochladen des Umgebungsparameters auf die zweite Verarbeitungseinheit; und

Empfangen (412) des von der ISP-Einheit hochgeladenen Umgebungsparameters über die zweite Verarbeitungseinheit.

**7.** Bildverarbeitungsverfahren nach einem der Ansprüche 1 bis 6, wobei das Durchführen (206) von Schönheitsverarbeitung am zu verarbeitenden Bild gemäß dem Zielschönheitsparameter umfasst:

Zuordnen (420) eines Wertes zu einem Flagbit jedes Schönheitsmoduls gemäß dem Zielschönheitsparameter;

Erfassen (420) des Schönheitsmoduls zum Durchführen von Schönheitsverarbeitung gemäß dem Wert des Flagbits jedes Schönheitsmoduls; und

Eingeben (420) des Zielschönheitsparameters in das erfasste Schönheitsmodul, um Schönheitsverarbeitung am zu verarbeitenden Bild durchzuführen.

**8.** Bildverarbeitungsvorrichtung, umfassend:

einen Speicher, der ein oder mehrere Computerprogramme speichert; und

einen Prozessor, der zum Ausführen des einen oder der mehreren im Speicher gespeicherten Computerprogramme konfiguriert ist, um den Prozessor zum Ausführen des Bildverarbeitungsverfahrens nach einem der Ansprüche 1 bis 7 zu befähigen.

**9.** Computerlesbares Speichermedium, das ein Computerprogramm darauf speichert, wobei das Computerprogramm von einem Prozessor ausgeführt wird, um das Bildverarbeitungsverfahren nach einem der Ansprüche 1 bis 7 zu implementieren.

## Revendications

**1.** Procédé de traitement d'image, appliqué dans un terminal et comprenant :

l'acquisition (202), par l'intermédiaire d'une première unité de traitement du terminal, d'une image à traiter, l'acquisition d'un paramètre de caractéristique faciale en fonction de l'image à traiter, l'envoi du paramètre de caractéristique faciale à une deuxième unité de traitement du terminal, et l'envoi de l'image à traiter à une troisième unité de traitement du terminal, le paramètre de caractéristique faciale indiquant un paramètre pour représenter un attribut de figure correspondant à un visage dans l'image à traiter et comprenant une race, un sexe, un âge et un type de peau correspondant au visage ;

la réception (204), par l'intermédiaire de la deuxième unité de traitement, du paramètre de caractéristique faciale envoyé par la première unité de traitement, l'acquisition d'un paramètre environnemental correspondant à l'image à traiter, l'acquisition d'un paramètre de beauté cible en fonction du paramètre de caractéristique faciale et du paramètre environnemental, et l'envoi du paramètre de beauté cible à la troisième unité de traitement, le paramètre environnemental indiquant un paramètre lié à un environnement dans lequel l'image à traiter est générée, et comprenant une luminosité environnementale et une température de couleur environnementale ; et

la réception (206), par l'intermédiaire de la troisième unité de traitement, du paramètre de beauté cible envoyé par la deuxième unité de traitement, la réception de l'image à traiter envoyée par la première unité de traitement, et la réalisation d'un traitement de beauté sur l'image à traiter en fonction du paramètre de beauté cible, le paramètre de beauté cible indiquant un paramètre pour le traitement de beauté sur l'image à traiter et comprenant un premier paramètre de beauté correspondant au paramètre de caractéristique faciale et un deuxième paramètre de beauté correspondant au paramètre environnemental,

l'acquisition du paramètre de beauté cible en fonction du paramètre de caractéristique faciale et du paramètre environnemental comprenant :

l'acquisition du premier paramètre de beauté en fonction du paramètre de caractéristique faciale, l'acquisition du second paramètre de beauté en fonction du paramètre environnemental, et l'acquisition du paramètre de beauté cible en fonction du premier paramètre de beauté et du second paramètre de beauté ;

**caractérisé par** :

l'acquisition du paramètre de caractéristique faciale en fonction de l'image à traiter comprenant :

la détection d'une région de visage dans l'image à traiter ; l'acquisition d'un paramètre d'attribut physique correspondant à la région de visage, le paramètre d'attribut physique comprenant au moins l'une d'une zone de région de la région de visage ou d'informations de profondeur correspondant à la région de visage ; la détermination si la région de visage doit être retouchée en fonction du paramètre d'attribut physique ; et en réponse à la détermination du fait que la région de visage doit être retouchée, l'acquisition du paramètre de caractéristique faciale correspondant à la région de visage devant être retouchée par l'intermédiaire d'un modèle de reconnaissance de caractéristique.

2. Procédé de traitement d'image selon la revendication 1, l'acquisition (202) de l'image à traiter comprenant :

l'acquisition (402), par l'intermédiaire d'une unité de traitement de signal d'image, ISP, du terminal, d'une image originale générée par un dispositif d'imagerie, la génération de l'image à traiter en fonction de l'image originale, et le téléchargement de l'image à traiter vers la première unité de traitement du terminal ; et la réception (404), par l'intermédiaire de la première unité de traitement du terminal, de l'image à traiter téléchargée par l'unité ISP.

3. Procédé de traitement d'image selon la revendication 1, l'acquisition (202) de l'image à traiter comprenant :

la réception, par l'intermédiaire de la première unité de traitement du terminal, d'une instruction de beauté provenant d'un utilisateur ; et l'acquisition de l'image à traiter en fonction de l'instruction de beauté, l'instruction de beauté comprenant un identifiant d'image.

4. Procédé de traitement d'image selon la revendication 1, le modèle de reconnaissance de caractéristiques étant obtenu en fonction d'un ensemble d'échantillons de visage.

5. Procédé de traitement d'image selon la revendication 1, comprenant en outre :

l'envoi (302), par l'intermédiaire de la première unité de traitement, de l'image à traiter à la deuxième unité de traitement ; et la réception (304), par l'intermédiaire de la deuxième unité de traitement, de l'image à traiter, et l'acquisition d'un troisième paramètre de beauté correspondant à l'image à traiter en fonction d'un modèle de paramètre historique, le modèle de paramètre historique étant obtenu en fonction d'images de beauté historiques ; l'acquisition (204) du paramètre de beauté cible en fonction du premier paramètre de beauté et du deuxième paramètre de beauté comprenant : l'acquisition (306) du paramètre de beauté cible en fonction du premier paramètre de beauté, du deuxième paramètre de beauté et du troisième paramètre de beauté.

6. Procédé de traitement d'image selon la revendication 1, l'acquisition (204) du paramètre environnemental correspondant à l'image à traiter comprenant :

l'acquisition (410), par l'intermédiaire de l'unité ISP du terminal, du paramètre environnemental correspondant à l'image à traiter, et le téléchargement du paramètre environnemental vers la deuxième unité de traitement ; et la réception (412), par l'intermédiaire de la seconde unité de traitement, du paramètre environnemental téléchargé par l'unité ISP.

7. Procédé de traitement d'image selon l'une quelconque des revendications 1 à 6, la réalisation (206) d'un traitement de beauté sur l'image à traiter en fonction du paramètre de beauté cible comprenant :

l'attribution (420) d'un bit indicateur de chaque module de beauté avec une valeur en fonction du paramètre de beauté cible ; l'acquisition (420) du module de beauté pour réaliser un traitement de beauté en fonction de la valeur du bit indicateur de chaque module de beauté ; et la saisie (420) du paramètre de beauté cible dans le module de beauté acquis pour réaliser un traitement de beauté sur l'image à traiter.

8. Dispositif de traitement d'image, comprenant :

une mémoire stockant un ou plusieurs programmes informatiques ; et
un processeur, configuré pour exécuter le ou les programmes informatiques stockés dans la mémoire pour permettre au processeur d'exécuter le procédé de traitement d'image selon l'une quelconque des revendications 1 à 7.

9. Support de stockage lisible par ordinateur, stockant un programme informatique sur celui-ci, le programme informatique étant exécuté par un processeur pour mettre en œuvre le procédé de traitement d'image selon l'une quelconque des revendications 1 à 7.

FIG. 1

202

Through a first processing unit of a terminal, an image to be processed is acquired, a facial feature parameter is acquired according to the image to be processed, the facial feature parameter is sent to a second processing unit of the terminal and the image to be processed is sent to a third processing unit of the terminal

204

Through the second processing unit, the facial feature parameter sent by the first processing unit is received, an environmental parameter corresponding to the image to be processed is acquired, a target beauty parameter is acquired according to the facial feature parameter and the environmental parameter, and the target beauty parameter is sent to the third processing unit of the terminal

206

Through the third processing unit, the target beauty parameter sent by the second processing unit is received, the image to be processed sent by the first processing unit is received, and beauty processing is performed on the image to be processed according to the target beauty parameter

FIG. 2

302

An image to be processed is sent to a second processing unit through a first processing unit

304

Through the second processing unit, the image to be processed is received, and a third beauty parameter corresponding to the image to be processed is acquired according to a historical parameter model, wherein the historical parameter model is obtained according to historical retouched images

306

A target beauty parameter is acquired according to a first beauty parameter, a second beauty parameter and the third beauty parameter

FIG. 3

402
Through an ISP unit of a terminal, an original image generated by an imaging device is acquired, an image to be processed is generated according to the original image, and the image to be processed is uploaded to a first processing unit of the terminal

404
The image to be processed uploaded by the ISP unit is received through the first processing unit of the terminal

406
A face region in the image to be processed is detected, and a facial feature parameter corresponding to the face region is acquired through a feature recognition model, wherein the feature recognition model is obtained through a set of face samples

408
The facial feature parameter is sent to a second processing unit of the terminal, and the image to be processed is sent to a third processing unit of the terminal

410
Through the ISP unit of the terminal, an environmental parameter corresponding to the image to be processed is acquired, and the environmental parameter is uploaded to the second processing unit

412
The facial feature parameter sent by the first processing unit is received through the second processing unit, and the environmental parameter uploaded by the ISP unit is received through the second processing unit

414
A first beauty parameter is acquired according to the facial feature parameter, and a second beauty parameter is acquired according to the environmental parameter

416
A target beauty parameter is acquired according to the first beauty parameter and the second beauty parameter, and the target beauty parameter is sent to the third processing unit of the terminal

418
Through the third processing unit, the target beauty parameter sent by the second processing unit is received, and the image to be processed sent by the first processing unit is received

420
A flag bit of each beauty module in the third processing unit is assigned with a value according to the target beauty parameter, the beauty module for performing beauty processing is acquired according to the value of the flag bit of each beauty module, and the target beauty parameter is input into the acquired beauty module to perform beauty processing on the image to be processed

**FIG. 4**

**FIG. 5**

**FIG. 6**

**FIG. 7**

**FIG. 8**

Image to be processed

902

Feature layer

FD

| Race | Sex | Age | Skin color | Skin type | Facial form | Makeup | ... ... |

904

Adaptation layer

Historical beauty images → Beauty parameters ← Environmental parameters

906

Processing layer

| Filtering | Whitening | Eye widening | Face-lift | Skin color regulation | Freckle removal | Eye brightening | Pouch removal | Tooth whitening |
| Lip retouching | ... ... |

Output image

**FIG. 9**

**FIG. 10**

**FIG. 11**

Image processing device1200

┌─ 1202
Image acquisition module

┌─ 1204
Environmental parameter acquisition module

┌─ 1206
Feature extraction module

┌─ 1208
Parameter acquisition module

┌─ 1210
Beauty processing module

**FIG. 12**

1320 Sensor
1330 Image memory
1310 Imaging device (camera)
1312 Lens
1314 Image sensor
1340 ISP unit
1380 Display
1360 Beauty module
1370 Coder/decoder
1350 Control logic unit

**FIG. 13**

**EP 3 477 931 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107302662 A